(19) Europäisches Patentamt
European Patent Office
Office européen des brevets

(11) Veröffentlichungsnummer: **0 269 832**
**A2**

(12) **EUROPÄISCHE PATENTANMELDUNG**

(21) Anmeldenummer: **87115533.9**

(22) Anmeldetag: **23.10.87**

(51) Int. Cl.⁴: **C08L 83/10**, C08L 77/00, C08L 51/04

(30) Priorität: **05.11.86 DE 3637677**

(43) Veröffentlichungstag der Anmeldung:
**08.06.88 Patentblatt 88/23**

(84) Benannte Vertragsstaaten:
**CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Wittmann, Dieter, Dr.**
**Doerperhofstrasse 15**
**D-4150 Krefeld 1(DE)**
Erfinder: **Westeppe,Uwe,Dr.**
**Yorckstrasse 19**
**D-5360 Remscheid 11(DE)**
Erfinder: **Idel, Karsten-Josef, Dr.**
**Am Schwarzkamp 38**
**D-4150 Krefeld 1(DE)**
Erfinder: **Lindner, Christian, Dr.**
**Riehler Strasse 200**
**D-5000 Köln 60(DE)**
Erfinder: **Merten, Josef, Dr.**
**Krünsend 30**
**D-4052 Korschenbroich 1(DE)**
Erfinder: **Selbeck, Harald, Dr.**
**Erftweg 73**
**D-4150 Krefeld 1(DE)**

(54) **Schlagzähe, dimensionsstabile Polyamid-Formmassen.**

(57) Die Erfindung betrifft thermoplastische Formmassen mit verbesserten Eigenschaften, insbesondere verbesserter Dimensionsstablität und Kerbschlagzähigkeit bei insbesondere tiefen Temperaturen, als Abmischung aus mindestens 35 Gew.-% eines Polydiorganosiloxancarbonamid-Einheiten enthaltenden Copolyamids und/oder einer Mischung aus teilkristallinen Polyamiden und Polydiorganosiloxancarbonamid-Einheiten enthaltenden (Co)-Polyamiden, sowie 1 - 65 Gew.-% an Pfropfprodukten von Vinylpolymren auf Kautschuke.

Ein weiterer Gegenstand dieser Erfindung sind oben charakterisierte, tieftemperaturzähe, dimensionsstabile Formmassen, welche weiterhin amorphe, siloxanfreie Polyamide in Mengen bis 64 Gew.-% zugesetzt enthalten.

EP 0 269 832 A2

BAYER AKTIENGESELLSCHAFT 5090 Leverkusen, Bayerwerk
Konzernverwaltung RP
Patentabteilung OER/Ke-c

Schlagzähe, dimensionsstabile Polyamid-Formmassen

Die Erfindung betrifft thermoplastische Formmassen mit verbesserten Eigenschaften, insbesondere verbesserter Dimensionsstabilität und Kerbschlagzähigkeit bei insbesondere tiefen Temperaturen, als Abmischung aus mindestens 35 Gew.-% eines Polydiorganosiloxancarbonamid-Einheiten enthaltenden Copolyamids und/oder einer Mischung aus teilkristallinen Polyamiden und Polydiorganosiloxancarbonamid-Einheiten enthaltenden (Co)Polyamiden, sowie 1 - 65 Gew.-% an Pfropfprodukten von Vinylpolymeren auf Kautschuke.

Ein weiterer Gegenstand dieser Erfindung sind oben charakterisierte, tieftemperaturzähe, dimensionsstabile Formmassen, welche weiterhin amorphe siloxanfreie Polyamide in Mengen bis 64 Gew.-% zugesetzt enthalten.

Schlagzähe thermoplastische Polyamidformmassen, die Pfropfprodukte enthalten, sind bekannt: So enthalten gemäß DE-A 2 435 266 solche Formmassen Pfropfprodukte von Vinylmonomeren und (Meth)Acrylsäure auf Kautschuken. Nach JA 2 354/71 lassen sich auch Styrol/Acrylnitril-(SAN)-Pfropfpolymerisate verwenden. In DE-A 3 105 364 werden Mischungen beansprucht, die Pfropfprodukte von (Meth)Acrylsäureestern auf Kautschuken enthalten. Im US-A 4 167 505 wird die Eignung von Pfropfpolymerisaten, deren Pfropfäste aus Alkylacrylat bestehen, hervorgehoben.

Bei derartigen Formmassen handelt es sich durchweg um Thermoplaste mit verbesserter Zähigkeit. Das Optimum der Kerbschlagzähigkeit wird allerdings oft erst bei hohen Gehalten an Pfropfprodukt erzielt, wodurch nicht nur die Thermoplastverarbeitbarkeit beeinträchtigt, sondern auch die Steifigkeit dieser Formmassen herabgesetzt wird. Zusammen mit einer durch Wasseraufnahme bedingten Dimensionsänderung sowie Steifigkeitsverlusten erschweren die obengenannten Nachteile eine Anwendung herkömmlicher Polyamid-Formmassen in bestimmten Bereichen, z.B. bei KFZ-Karosserieteilen.

Der Zusatz von Silikonölen zu Thermoplasten, unter anderem auch zu Polyamiden, zur Verbesserung der Verarbeitbarkeit ist gleichfalls bekannt, siehe z.B. European Plastic News, July/August 1976, S. 32/33 oder die EP-A 583. Nachteilig ist jedoch die leichte Extrahierbarkeit der Öle sowie insbesondere eine schlechte Lackierbarkeit der Formmassen.

In US-A 4 346 200 wird die verbesserte Zugfestigkeit und Kerbschlagzähigkeit von Formmassen aus Polyamiden und elastomeren Blockcopolyamiden, deren Elastomersegmente auch Poly-($C_1$-$C_4$-dialkylen)-siloxane genannt werden, hervorgehoben.

Nach EP-A 0 054 426 und DE-A 2 120 961 lassen sich die Oberflächeneigenschaften und Verarbeitbarkeiten von Polyamiden durch Einbau von Siloxansequenzen günstig beeinflussen.

Das Zähigkeitsniveau von Formmassen aus Polysiloxan-Polyamid-Blockcopolymeren allein oder in Mischung mit Polyamiden oder auch von Silikonöle enthaltenden Polyamiden ist jedoch für die obengenannten Anwendungen als witterungsexponierte KFZ-Außenteile nicht ausreichend.

Technisches Ziel sind demzufolge gut verarbeitbare, dimensionsstabile Polyamid-Formmassen, insbesondere mit verringerten Pfropfproduktanteilen und höherer Steifigkeit, mit gegenüber herkömmlichen Formmassen verbesserten Tieftemperatur-Kerbschlagzähigkeiten, die auch im konditionierten Zustand weitgehend erhalten bleiben sollen.

Überraschenderweise wurde nun gefunden, daß sich die Kerbschlagzähigkeit, insbesondere bei tiefen Temperaturen, und die Steifigkeit/Dimensionsstabilität von Mischungen aus teilkristallinen Polyamiden und Pfropfprodukten dann erheblich verbessern läßt, wenn die Polyamid-Komponente Polydiorganosiloxancarbonamid-Einheiten enthält.

Dieser überraschende, durch die Polydiorganosiloxancarbonamid-Komponente hervorgerufene, synergistische Effekt, kommt auch dann voll zum Tragen bzw. wird sogar noch verstärkt, wenn die Formmassen zusätzlich amorphes Polyamid enthalten. Die so erhaltenen Formmassen besitzen im Vergleich mit den in EP-A 0 073 036 beschriebenen, siloxanfreien Produkten wesentlich verbesserte Kerbschlagzähigkeiten, insbesondere bei tiefen Temperaturen.

Gegenstand der Erfindung sind somit thermoplastische Formmassen in Form einer Abmischung aus

A) mindestens 35 Gew.-%, vorzugsweise 50 bis 96 Gew.-%, besonders bevorzugt 65 bis 95 Gew.-%

1. eines Polydiorganosiloxancarbonamid-Einheiten enthaltenden, teilkristallinen, thermoplastischen (Co)polyamids

und/oder

2. einer Mischung aus

a) teilkristallinen, thermoplastischen Polyamiden und

b) eines Polydiorganosiloxancarbonamid-Einheiten enthaltenden teilkristallinen oder amorphen Polyamids oder Copolyamids,

wobei A) insgesamt 0,1 bis 40 Gew.-%, bevorzugt 0,5 bis 25 Gew.-%, besonders bevorzugt 1 bis 10 Gew.-% an Polydiorganosiloxancarbonamid-Einheiten enthält,

B) 1 bis 65 Gew.-%, vorzugsweise 2 bis 50 Gew.-%, besonders bevorzugt 5 bis 35 Gew.-% eines Pfropfproduktes von Vinylmonomeren auf einer Kautschukgrundlage und

C) 0 bis 64 Gew.-%, vorzugsweise 2 bis 64 Gew.-%, besonders bevorzugt mindestens 3 Gew.-%, z.B. 10 bis 30 Gew.-%, eines amorphen Polyamids.

Die Werte von A) bis C) sind erfindungsgemäß somit jeweils so auszuwählen, daß sich die Summe 100 % ergänzt.

Die Polydiorganosiloxancarbonamid-Struktur enthaltenden Polyamide A) werden hergestellt, indem man bei den an sich bekannten Verfahren zur Herstellung von Polyamiden, z.B. Schmelzkondensation oder Phasengrenzflächenreaktion von Dicarbonsäuren bzw. deren Derivaten und Diaminen oder von Aminocarbonsäuren bzw. Lactamen, einen Teil der Dicarbonsäure(n)/-derivat(e) und/oder des Diamins bzw. des Lactams oder der Aminocarbonsäure durch entsprechende, Amino- oder Carboxylendgruppen enthaltende, sogenannte organofunktionelle Polydiorganosiloxan-Verbindungen ersetzt.

Werden Polyamide verwendet, die nach bekannten Verfahren aus Lactamen hergestellt werden, führt man die Polymerisation in Gegenwart eines aminoendgruppenhaltigen Polydiorganosiloxans (und gegebenenfalls der äquimolaren Menge einer Dicarbonsäure) oder umgekehrt in Gegenwart eines Carboxyl(derivat)-endgruppenhaltigen Polydiorgansiloxans (und gegebenenfalls der äquimolaren Menge eines Diamins) durch.

Bei den vorstehend genannten, geeignete Endgruppen enthaltenden Polydiorganosiloxanen handelt es sich vorzugsweise um difunktionelle Produkte, wobei jedoch gegebenenfalls die Anwesenheit geringer Mengen monofunktioneller und/oder trifunktioneller Produkte in Kauf genommen werden kann.

Kennzeichnend für die Polyamidkomponente ist, daß sie Polydiorganosiloxancarbonamid-Einheiten der allgemeinen Formel I

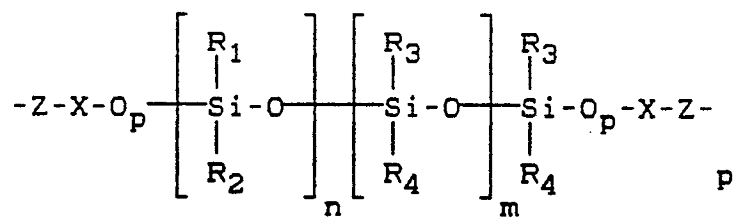

$p = 0,1$

I

enthält, wobei

$R^1$, $R^2$, $R^3$ und $R^4$ unabhängig voneinander gleich oder verschieden sein können und $C_1$-$C_{12}$-Alkyl, Alkenyl, Aryl, Aralkyl, halogeniertes Alkyl, Aryl oder Aralkyl sein können; bevorzugte Reste R sind Methyl, Phenyl und Vinyl, besonders bevorzugt ist Methyl;

X $C_1$-$C_{18}$-Alkylen-, Arylen- oder Aralkylen-Reste, bevorzugt $C_2$-$C_6$-Alkylen-Reste, ganz besonders bevorzugt Isopropylen-Reste;

Z 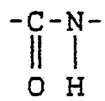 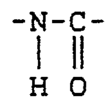 oder über -X- gebundenes 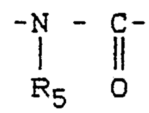 ;

$R_5$ Alkyl, vorzugsweise $C_1$-$C_6$-Alkyl, oder $C_5$-$C_8$-Cycloalkyl, vorzugsweise Cyclohexyl, bedeuten und

n und m gleich oder verschieden sein können, wobei die Summe aus n + m größer als 4 und kleiner als 1.000, vorzugsweise größer als 10 und kleiner als 600, besonders bevorzugt größer als 20 und kleiner als 300 sein soll.

Die Herstellung von Polydiorganosiloxanpolyamiden mit Silicium-Kohlenstoff-Bindung (p = 0) ist Stand der Technik und wird z.B. in EP-A 54 426, DE-A 2 120 961, DE-A 2 121 787 und US-A 3 392 143 beschrieben; Polyamide mit p = 1 sind neu (sie werden zu einer gleichzeitig eingereichten Anmeldung der Anmelderin P (Le A 24 820)) beansprucht.

Aminogruppen-haltige, organofunktionelle Polysiloxane der Formel II (mit -Si-O-X-Bindungen; d.h. p = 1)

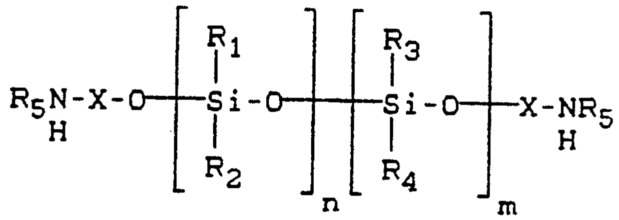

II

sind bekannte Verbindungen und können z.B. durch Umsetzung eines Polysiloxans III

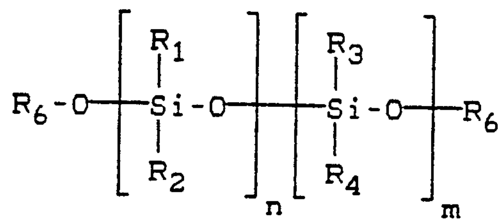

III

mit äquimolaren Mengen einer Hydroxyaminoverbindung HO-X-$NHR_5$ gegebenenfalls in Gegenwart eines Katalysators dargestellt werden (z.B. E. Larsson, Acta Chimica Scandinavica <u>8</u>, 898 (1954)).

In den beiden letztangeführten Formeln haben

$R_1$ bis $R_4$ die oben angegebene Bedeutung;

$R_5$ ist (in Formeln II und III) H oder Alkyl, bevorzugt $C_1$-$C_6$-Alkyl oder $C_5$-$C_8$ Cycloalkyl, bevorzugt Cyclohexyl, insbesondere ist hier $R_5$ H oder Cyclohexyl;

$R_6$ $C_1$-$C_6$-Alkyl oder -Aryl, vorzugsweise Methyl;

X, m und n haben die oben angegebene Bedeutung.

Zur Herstellung der Polydiorganosiloxancarbonamid-Einheiten enthaltenden (Co)polyamide werden die Aminoterminierten Polydiorganosiloxan-Verbindungen in Gegenwart von etwa äquimolaren Mengen einer Dicarbonsäure (und bei der Herstellung von Copolyamiden) mit Salzen von Dicarbonsäuren und Diaminen, Aminocarbonsäuren oder Lactamen, zu Polysiloxan-haltigen Polyamiden kondensiert. Überraschenderweise erweist sich hier die Si-O-X-Bindung als für dieses System als hinreichend hydrolysestabil, obwohl man sonst derartige Silikon-Derivate wegen ihrer leichten Hydrolysierbarkeit als wenig oder ungeeignet ansieht.

Geeignete Dicarbonsäure bzw. Diamine sind solche, die üblicherweise zur Darstellung von Polyamiden verwendet werden, wie z.B. $C_2$-$C_{10}$-α,ω-Dicarbonsäuren, Phthalsäure, Terephthalsäure, Isophthalsäure, Cyclohexandicarbonsäure, $C_2$-$C_{10}$-α,ω-Diamine, m- oder p-Xylylendiamin, 2,2,4- und/oder 2,4,4-Trimethylhexamethylendiamin, Isophorondiamin, oder andere übliche, zur Herstellung von Polyamiden verwendete Dicarbonsäuren oder Diamine.

Alternativ wird das endgruppenhaltige, die reaktiven Gruppen an organischer Reste gebundene ("organofunktionelle") Polydiorganosiloxan vorteilhaft in Gegenwart äquimolarer Mengen Dicarbonsäuren bzw. Diamine (je nach Art der Endgruppen in der Siloxanverbindung) mit einem Lactam mit 6 bis 12 C-Atomen kondensiert. Die Darstellung der Siloxangruppen-haltigen Polyamide kann auch durch Lösungskondensation bzw. im Falle von Lactamen auch durch anionische Polymerisation in Gegenwart üblicher Katalysatoren durchgeführt werden.

Zur Herstellung von polydiorganosiloxanhaltigen (Co)-Polyamiden, insbesondere solchen mit hohen Gehalten (>10 Gew.-%, vorzugsweise ≥15 Gew.-%) an Siloxansegmenten kann die Herstellung vorteilhaft in Gegenwart kleiner Mengen, z.B. 0,1 bis 20 Gew.-%, bevorzugt ≤10 Gew.-%, besonders bevorzugt ≤5 Gew.-%, z.B. 0,5 bis 5 Gew.-%, bezogen auf das (Co)-Polyamid, eines Polyetherdiamins mit mindestens 2 Oxyalkylengruppen und 2 (cyclo)aliphatisch gebundenen Aminogruppen und Molekulargewichten ≥148, insbesondere ≥400, durchgeführt werden. Geeignete Polyetherdiamine sind z.B. 1,11-Diamino-3,6,9-trioxa-undecan, 1,8-Diamino-3,6-dioxaoctan, insbesondere aber Polyoxyalkylenpolyetherdiamine wie z.B. Oxyethylen-, Oxypropylen- oder Oxytetramethylen-Polyetherdiamine mit Molekulargewichten von vorzugsweise 400 bis 3.500.

Diese Polyoxyalkylenetherdiamine können beispielsweise durch Druckaminierung von Polyoxyalkylenetherdiolen, durch Addition von Acrylnitril an Polyetherdiole und anschließende Reduktion der Nitrilgruppe, durch alkalisch katalysierte Verseifung von NCO-Prepolymeren aus Polyetherdiolen und (cyclo)aliphatischen Diisocyanaten oder nach anderen, bekannten Methoden hergestellt werden. Beispiele für gut erfindungsgemäß einsetzbare Polyetherdiamine sind die handelsüblichen Jeffamine®.

Der Zusatz von Polyetherdiaminen ist sowohl bei der Herstellung von Polyamiden aus Lactamen (z.B. Nylon 6) als auch insbesondere aus Salzen aus Dicarbonsäuren und Diaminen, z.B. Nylon 66; 6,10 oder anderen, wirksam und kann ganz besonders effektiv zur Darstellung von amor-

phen, Polydiorganosiloxancarbonamid-Einheiten enthaltenden (Co)-Polyamiden (z.B. auf Basis von Isophthalsäure und Hexamethylendiamin und gegebenenfalls ternären Cokomponenten) verwendet werden.

Durch die zusätzliche Einkondensation des Polyetherdiamins werden (Co)-Polyamidformmassen erhalten, bei denen eine hervorragende Verträglichkeit zwischen den Polysiloxan und Polyamid-Einheiten besteht und bei denen die Polydiorganosiloxan-extrahierbaren Anteile, selbst bei Verwendung guter Lösungsmittel für die Polydiorganosiloxane, deutlich geringer ist als ohne Polyetherdiamin-Einbau.

Die Polydiorganosiloxan-Einheiten können dabei mit sich selbst und/oder mit den Polyamid-bildenden Komponenten (einschließlich den Polyetherdiaminen) über die Carbonamidgruppen verknüpft sein. Charakteristisch bei der Verwendung der organofunktionellen Polydiorganosiloxan-Komponenten ist, daß nach der Einbaureaktion nur ein sehr kleiner Teil mit einem für das Ausgangssiloxan guten Lösungsmittel aus dem Polyamid extrahierbar ist.

Als Polyamid-Komponente A.2a) der erfindungsgemäßen Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder

Sebacinsäure und/oder Azelainsäure und/oder Adipinsäure und/oder einer Cyclohexandicarbonsäure besteht, und deren Diaminkomponente ganz oder teilweise insbesondere aus m-und/oder p-Xylylendiamin und/oder Hexamethylendiamin und/oder 2,2,4- und/oder 2,4,4-Trimethylhexamethylendiamin und/oder Isophorondiamin bestehen und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A.2a) sind Polyamid-6 und Polyamid-6,6 oder Copolyamide mit nur geringen Anteilen (bis etwa 10 Gew.-%) der Cokomponenten.

Die genannten, polyamidbildenden Komponenten können auch zur Herstellung der Polydiorganosiloxan-Einheiten enthaltenden Copolyamide A.1) oder A.2b) eingesetzt werden, wobei - wie bereits ausgeführt - Amino- und/oder Carboxyl-organofunktionelle, im wesentlichen lineare Polydiorganosiloxane (vorzugsweise Siloxanverbindungen auf Basis Polydimethylsiloxanen) eingesetzt werden.

Als organofunktionelle, im wesentlichen linearen Polydiorganosiloxanverbindungen können beispielsweise folgende Verbindungen Verwendung finden: Die Verbindungen besitzen einerseits mehrfach wiederkehrende Struktureinheiten

der Formel $-O-Si(R)_2-$, wobei in dieser Formel R für einen $C_1$-$C_4$-Alkyl oder einen Phenylrest jedoch vorzugsweise für einen Methylrest steht. Die endständigen funktionellen Amino- bzw. Carboxylgruppen sind dabei organofunktionell, d.h. nicht direkt an Silicium gebunden, sondern über Kohlenstoff-haltige Reste mit der Siloxangruppe verknüpft. Die carbofunktionellen Endgruppen stellen vorzugsweise aliphatische oder cycloaliphatische (gegebenenfalls Heteroatome wie insbesondere Sauerstoff enthaltende) Kohlenwasserstoffreste mit 1 bis 6 C-Atomen dar, die mindestens eine primäre, gegebenenfalls auch sekundäre Amino- oder (weniger bevorzugt) eine Carboxylgruppe aufweisen. Diorganofunktionelle (carbofunktionelle) Reste können beispielsweise in Form folgender Reste (über -O- an Si oder direkt an Si, bevorzugt über -O-an Si-Atome gebunden) vorliegen: $-CH_2-NH_2$, $-CH_2-CH_2-NH_2$, $-(CH_2)_4-NH_2$, $-CH_2-NH-C_4H_9$ oder $CH_2NH-C_6H_{11}$. In den einzubauenden Polysiloxanen können in der Kette neben den genannten $-O-Si(R)_2$-Einheiten auch Polyoxyalkylen-, insbesondere Polyoxyethylen- und/oder Polyoxypropylen-Einheiten vorliegen (funktionelle Polyethersiloxane).

Man kann teilkristalline, thermoplastische Polyamide A mit den Polydiorganosiloxancarbonamid-Einheiten gleich so aufbauen, daß die für die Komponente A) geforderte Menge an diesen Einheiten mit eingebaut wird (Copolyamide vom Typ A.1).

Vorzugsweise jedoch werden Polydiorganosiloxancarbonamid-Einheiten enthaltende Polyamide oder Copolyamide (A.2b) mit einem ausschließlichen Gehalt oder (bevorzugt) einem höheren Gehalt (z.B. $\leq$ 90 Gew.-%, insbesondere $\leq$ 65 Gew.-%) an diesen Siloxaneinheiten, als für Komponente A gefordert, aufgebaut und dann in geeigneten Mengen mit (siloxanfreien) teilkristallinen thermoplastischen Polyamiden A.2a) in entsprechenden Mengen vermischt.

Der Gehalt an Polydiorganosiloxancarbonamid-Einheiten ist nach oben hin im wesentlichen durch zu hohen Steifigkeitsverlust (evtl. Übergang zu elastomeren Eigenschaften) begrenzt, der die Verwendung der Polyamid-Formmassen für die beabsichtigten Anwendungen ausschließt.

Die Polyamide der Komponente A) sollen vorzugsweise eine relative Viskosität (gemessen an einer 1 gew.-%igen Lösung in m-Kresol bei 25° C) von 2,0 bis 5,0, besonders bevorzugt von 2,5 bis 4,0 aufweisen.

Die Pfropfprodukte B) im Sinne der Erfindung bestehen zu 65 bis 85 Gew.-%, insb. 75-85 Gew.-% aus einer vernetzten, teilchenförmigen elastomeren Pfropfgrundlage mit einem durchschnittlichen Teilchendurchmesser ($d_{50}$) von 0,25 bis 0,8 µm, insb. 0,3-0,6 µm, einem Gelgehalt von wenigstens 70 Gew.-% und einer Glasübergangstemperatur von <-20° C und andererseits 35 bis 15 Gew.-%, insb. 25-15 Gew.-% einer Pfropfauflage aus Vinylmonomerpolymerisat, das zu mehr als 40 Gew.-% auf die elastomere Kautschuk-Pfropfgrundlage aufgepfropft vorliegt.

Die in den Pfropfprodukten B) im Sinne der Erfindung vorliegenden Elastomerkomponenten sind Elastomere mit Glasübergangstemperaturen kleiner -20° C, wie z.B. Elastomere aus der Reihe der Dienkautschuke (insbesondere Polybutadien, Polychloropren, Polyisopren), Olefinkautschuke oder Acrylatkautschuke (insbesondere Homo- oder Copolymere von Acrylsäurealkylestern mit bis zu 12 C-Atomen in der Estergruppe, die zur möglichen Vernetzung mit polyfunktionellen ungesättigten Monomeren copolymerisiert sein können). Bevorzugte Kautschukkomponenten sind Polybutadiene sowie deren Copolymere mit Styrol-, Acrylnitril oder Alkylacrylaten, sowie Acrylatkautschuke. Die Elastomerkomponenten besitzen eine teilchenförmige, vernetzte Struktur mit mittleren Teilchendurchmessern von 0,25 bis 0,8 µm (insbesondere 0,3 bis 0,6 µm; $d_{50}$-Werte) und besitzen Gelgehalte von wenigstens 70 Gew.-%, vorzugsweise wenigstens 80 Gew.-%.

Insbesondere geeignete Kautschuke sind Polybutadiene oder deren Copolymerisate sowie Alkylacrylatkautschuke. Letztere sind dann besonders vorteilhaft, wenn sie eine sogenannte Kern-Mantel-Struktur aufweisen, d.h. sie enthalten einen Kern aus acrylatkautschukfremden Polymerisat. Dieser Kern ist von einer Hülle aus vernetztem Alkylacrylatkautschuk umgeben, die dann mit Vinylmonomerpolymerisat bepfropft ist. Derartige Kautschuke sind bekannt. Das Vinylmonomerpolymerisat liegt zu mehr als 40 Gew.-%, insbesondere mehr als 50 Gew.-%, auf der Elastomerkomponente in aufgepfropfter Form vor. Dieser Sachverhalt läßt mittels bekannter Methoden bestimmen, z.B. durch Messung der Pfropfausbeute.

Das Vinylmonomerpolymerisat besteht aus einem oder mehreren Monomeren aus der Gruppe der (Meth)Acrylsäure-($C_1$-$C_{18}$)Ester. Bevorzugte Pfropfauflagen bestehen zu mindestens 76 % aus Methylmethacrylat und bis zu 24 % aus anderen (Meth)Acrylsäureestern, wie z.B. n-Butylacrylat und t-Butylacrylat, die auch als Gemische vorliegen können.

Das Pfropfprodukt B wird durch Pfropfpolymerisation in Gegenwart eines wäßrigen Dispersion des Elastomeren erzeugt. Die Polymerisation wird z.B. durch Radikalinitiatoren initiiert, z.B. mit Persulfaten, Peroxiden, Percarbonaten, Perestern, insbesondere aber auch durch wasserlösliche Initiatoren wie Persulfate oder Redoxinitiatorsysteme; derartige Polymerisationsreaktionen oder Polymerisate sind bekannt.

Geeignete Pfropfpolymerisate im Sinne der Erfindung sind auch solche Pfropfpolymerisate, die über einen Stufenprozeß:

Kautschuk in Emulsion mit Vinylmonomeren gepfropft und
in vollständig gebrochener Emulsion (umhüllend) weiter mit Vinylpolymerisaten pfropfpolymerisiert worden sind (vgl. EP-A 17 60 12).

Weitere geeignete Pfropfpolymerisate werden in der EP-A 1 88 699 beschrieben.

Als amorphe Polyamide C) können die gemäß Stand der Technik bekannten Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, 2,2-Bis-(4-aminocyclohexyl)-propan, 3,3'-Dimethyl-4,4'-diamino-dicyclohexylmethan, 3-Aminomethyl-3,5,5-trimethyl-cyclohexylamin, 2,5- und/oder 2,6-Bis-(aminomethyl)-norbornan und/oder 1,4-Diamino-methylcyclohexan, mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomerer erhalten

werden, geeignet, ferner solche Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5 und/oder 2,6-Bis-(aminomethyl)-norbornan; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4-und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die amorphen Polyamide sollen vorzugsweise eine relative Viskosität (gemessen an einer 1 gew.-%igen Lösung in m-Kresol bei 25°C) von 2,0 bis 5,0, vorzugsweise von 2,5 bis 4,0 aufweisen.

Die erfindungsgemäßen Polyamidformmassen können übliche Additive, wie Gleit- und Entformungsmittel, Nukleierungsmittel, Stabilisatoren, Füll- und Verstärkungsstoffe, Flammschutzmittel sowie Farbstoffe enthalten.

Die Herstellung der Formmassen kann in üblichen Mischaggregaten, wie Walzen, Knetern, Ein- und Mehrwellenextrudern, erfolgen.

Wenn auch in den meisten Fällen sämtliche Komponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen.

So können die erfindungsgemäßen Formmassen auf den genannten Mischaggregaten hergestellt werden, indem die Komponenten A), B) und gegebenenfalls C) gemeinsam aufgeschmolzen und homogenisiert werden, oder indem das Pfropfpolymerisat B) in die Schmelze des Polyamids A) oder des Gemischs aus A) und C) eingearbeitet wird.

Die Temperatur bei der Herstellung der Mischungen sollte mindestens 10°C und zweckmäßig höchstens 80°C oberhalb des Schmelzpunktes des höherschmelzenden Polyamids liegen.

Entsprechend dem Eigenschaftsbild eignen sich die erfindungsgemäßen Formmassen überall im Spritzguß- und Extrusionssektor dort, wo die beschriebenen Eigenschaften gefordert werden, wie z.B. im KFZ-Bereich für Stoßfänger, Karosserieteile.

## Beispiele

A. Verwendete Komponenten

I. Polyamid-6 mit einer relativen Viskosität (gemessen an einer 1 Gew.-%igen Lösung in m-Kresol bei 25° C) von 3,0.

II. Polyamid-6 mit einer relativen Viskosität von 3,5, gemessen wie I.

III. Polyamid-6,6 mit einer relativen Viskosität von 3,0 gemessen wie I.

IV. Polydiorganosiloxancarbonamid-haltige Polyamide (SiPA)

Allgemeine Herstellungsvorschrift für SiPA mit verschiedenen Zahlendurchschnitts-Molekulargewichten ($P_n$):

Aminoendgruppen-haltige Polysiloxane

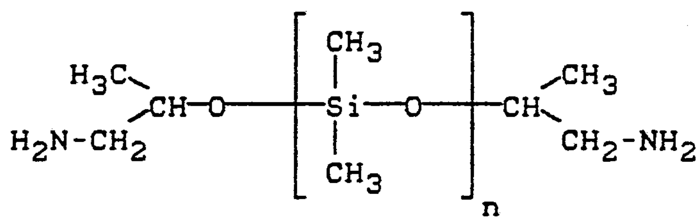

n = 40, 99, 213, 482 wurden aus Octamethylcyclotetrasiloxan, Isopropanolamin + KOH dargestellt.

102,4 g Caprolactam, 13,05 g ε-Aminocapronsäure und 12,5 g (10 Gew.-%) Aminoendgruppen-haltige Siloxane werden mit äquimolaren Mengen Adipinsäure (bzgl. Amino-Siloxan) in einer Kondensationsapparatur unter $N_2$ 1 h auf 220° C und 6 h auf 270° C erhitzt. Die Polyamidformmasse wird zerkleinert, mit Wasser extrahiert und getrocknet.

| Siloxan | n = 40 | 99 | 213 | 382 |
|---|---|---|---|---|
| $H_2O$-Extrakt (%) | 11,6 | 11,3 | 10,5 | 11,2 |
| η rel* | 2,77 | 3,19 | 3,06 | 3,38 |

* 1 Gew.-% Lsg. in m-Kresol bei 25° C

IV/1. n = 40
IV/2. n = 99
IV/3. n = 213
IV/4. n = 482

Bestimmung von $P_n$ : Durch 1H-NMR des Siloxans (Proton-Kernresonanz-Messung).

V. Propfprodukte

a) Elastomerpropfgrundlage

Polybutandienlatex, hergestellt durch wäßrige Emulsionspolymerisation, mit einem Polymerfeststoffgehalt von 50 Gew.-%, einem mittleren Teilchendurchmesser ($d_{50}$-Wert) von 0,4 µm und einem Gelgehalt von 89 Gew.-%.

b) Herstellung der verwendeten Propfprodukte

In einem Reaktor werden Latices der Elastomerpfropfgrundlage V a vorgelegt, so daß 1184 Gew.-Teile Kautschuk eingesetzt werden. Anschließend verdünnt man jeweils weiter mit soviel Wasser, bis sich ein Polymerfeststoffgehalt von 36,2 Gew.-% eingestellt hat. Bei einer Temperatur von 65 - 70° C startet man die Polymerisation durch Zugabe einer Lösung von 3,5 Gew.-Teilen Kaliumperoxodisulfat in 100 Gew.-Teilen Wasser. Danach werden folgende Mengenströme bei 65 - 70° C unter Rühren innerhalb von 4 Stunden gleichmäßig in den Reaktor eindosiert:

1) 300 Gew.-Teile Monomermischung
   a) Methylmethacrylat 100 % (V/1)
   b) Methylmethacrylat 90 Gew.-%, n-Butylacrylat 10 Gew.-% (V/2)

2) 410 Gew.-Teile Wasser
   29 Gew.-Teile Na-Salz der disproportionierten Abietinsäure
   22 Gew.-Teile in Natronlauge

Nach Beendigung der Zudosierung wird noch bei 65° C nachpolymerisiert. Nach Stabilisierung des Latex mit 1,6 Gew.-% phenolischen Antioxidantien wird durch Koagulation mittels Essigsäure/$MgSO_4$-Mischung bei Temperaturen von 70 - 98° C aufgearbeitet. Nach Waschen und Reinigen der Pfropfprodukte wird zum trockenen Pulver aufgearbeitet. Die Mengen an auf den Kautschuk aufgepfropften Polymerisat beträgt bei V/2 60 Gew.-%, bei V/1 56 Gew.-% (Pfropfausbeute).

VI. Amorphes Polyamid aus Isophthalsäure und Hexamethylendiamin mit einer relativen Viskosität (gemessen wie I) von 2,6 (übliche Herstellung)

B) <u>Herstellung und Prüfung der Polyamidformmassen</u>

Beispiele 1 - 14

Auf einem kontinuierlich arbeitenden Doppelwellenextruder wurden die Polyamid-Komponenten aufgeschmolzen und zu deren Schmelze das Pfropfpolymerisat eindosiert und in der Schmelze homogenisiert. Die Zylindertemperaturen wurden so gewählt, daß die in den Tabellen 1 - 3 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer üblichen Spritzgußmaschine ASTM-Prüfstäbe hergestellt. Geprüft wurde die Kerbschlagzähigkeit nach Izod bei verschiedenen Temperaturen und daraus der Spröd/Zäh-Übergang ermittelt.

Tabelle 1: Zusammensetzung und Eigenschaften der Formmassen

| Beispiel | Komponenten | | | | | | Spröd/Zäh-Übergang |
|---|---|---|---|---|---|---|---|
| | Polyamid[1] | | Siloxancarbonamid-komponente | | Pfropfprodukt | | |
| | Typ | Gew.-% | Typ | Gew.-% | Typ | Gew.-% | (°C) |
| 1 (Vergleich) | I | 70 | | | V 1 | 30 | -30 |
| 2 | I | 50 | IV 2 | 20 | V 1 | 30 | -40 |
| 3 (Vergleich) | II | 80 | | | V 1 | 20 | -10 |
| 4 | II | 60 | IV 2 | 20 | V 1 | 20 | -35 |

1) Die Massetemperaturen im Extruder und in der Spritzgußmaschine betrugen 270° C (Typ I) bzw. 280° C (Typ II)

Tabelle 2: Zusammensetzung und Eigenschaften der Formmassen

| Beispiel | Komponenten | | | | | | Spröd/Zäh-Übergang |
|---|---|---|---|---|---|---|---|
| | Polyamid[1] | | Siloxancarbonamid-komponente | | Pfropf-produkt | | |
| | Typ | Gew.-% | Typ | Gew.-% | Typ | Gew.-% | (°C) |
| 5 (Vergleich) | II | 80 | - | - | V 2 | 20 | -15 |
| 6 | II | 60 | IV 1 | 20 | V 2 | 20 | -25 |
| 7 | II | 60 | IV 3 | 20 | V 2 | 20 | -35 |
| 8 | II | 60 | IV 4 | 20 | V 2 | 20 | -30 |

1) Die Massetemperaturen im Extruder und in der Spritzgußmaschine betrugen 280°C.

Tabelle 3: Zusammensetzung und Eigenschaften der Formmassen

| Beispiel | Komponenten | | | | | | | | | |
|---|---|---|---|---|---|---|---|---|---|---|
| | Polyamid[1] | | Siloxancarbon-amidkomponente | | Pfropf-kautschuk | | Amorphes Polyamid | | Spröd/Zäh Übergang | Wasser-aufnahme |
| | Typ | Gew.-% | Typ | Gew.-% | Typ | Gew.-% | Typ | Gew.-% | (°C) | (%) nach 58 h |
| Anspruchs-kennzeichnung: | (A2a) | | (A2b) | | B | | C | | | |
| 9 (Vergleich) | III | 70 | - | - | V/1 | 30 | - | - | 0 | 4,93 |
| 10 | III | 60 | IV/3 | 10 | V/1 | 30 | - | - | -20 | 4,92 |
| 11 | III | 55 | IV/3 | 10 | V/1 | 30 | VI | 5 | -25 | 4,92 |
| 12 | III | 50 | IV/3 | 10 | V/1 | 30 | VI | 10 | -30 | 4,83 |
| 13 | III | 40 | IV/3 | 10 | V/1 | 30 | VI | 20 | -35 | 4,53 |
| 14 | III | 20 | IV/3 | 10 | V/1 | 30 | VI | 40 | -40 | 4,12 |

1) Die Massetemperaturen in Extruder und in der Spritzgußmaschine betragen 280°C.

2) Gewichtsaufnahme durch Wasserlagerung (60°C, 58 h, an je 10 ASTM-Stäben ermittelt).

## Patentansprüche

1. Thermoplastische Formmassen in Form einer Abmischung aus

A) mindestens 35 Gew.-%

1. eines Polydiorganosiloxancarbonamid-Einheiten enthaltenden, teilkristallinen, thermoplastischen Copolyamids

und/oder

2. einer Mischung aus einem

a) teilkristallinen, thermoplastischen Polyamid und

b) eines Polydiorganosiloxancarbonamid-Einheiten enthaltenden, amorphen und/oder teilkristallinen Polyamids oder Copolyamids,

wobei A) insgesamt 0,1 bis 40 Gew.-% an Polydiorganosiloxancarbonamid-Einheiten enthält,

B) 1 bis 65 Gew.-% eines Pfropfproduktes von Vinylmonomeren auf einer Kautschukgrundlage und

C) 0 bis 64 Gew.-% eines amorphen Polyamids,

wobei die thermoplastischen Formmassen gegebenenfalls zusätzlich übliche Additive und Zusätze in üblichen Mengen enthalten können.

2. Formmassen nach Anspruch 1, dadurch gekennzeichnet, daß die Polydiorganosiloxancarbonamid-Einheiten in A) der Formel I

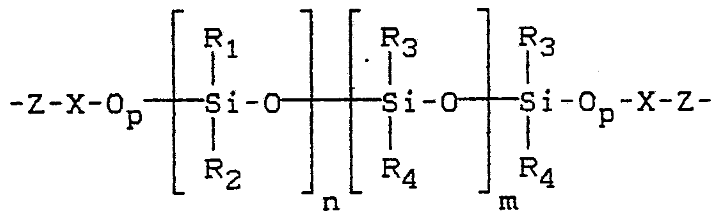

I

p = 0,1

entsprechen, wobei

$R^1$, $R^2$, $R^3$ und $R^4$ unabhängig voneinander gleich oder verschieden sein können und $C_1$-$C_{12}$-Alkyl, Alkenyl, Aryl, Aralkyl, halogeniertes Alkyl, Aryl oder Aralkyl sein können; bevorzugte Reste R Methyl, Phenyl und Vinyl sind, besonders bevorzugt Methyl ist;

X $C_1$-$C_{18}$-Alkylen-, Arylen- oder Aralkylen-Reste, bevorzugt $C_2$-$C_6$-Alkylen-Reste, ganz besonders bevorzugt Isopropylen-Reste;

Z 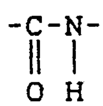 , 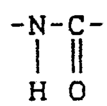 oder (über -X- gebundenes)

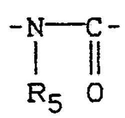 ;

$R_5$ Alkyl, vorzugsweise $C_1$-$C_6$-Alkyl, oder $C_5$-$C_8$-Cycloalkyl, vorzugsweise Cyclohexyl, bedeuten und

n und m gleich oder verschieden sein können, wobei die Summe aus n + m größer als 4 und kleiner als 1.000, vorzugsweise größer als 10 und kleiner als 600, besonders bevorzugt größer als 20 und kleiner als 300 ist,

und auf Basis organofunktioneller Siloxane, vorzugsweise Polydimethylsiloxane oder Polydiphenylsiloxane, mit einem mittleren Polymerisationsgrad (n + m) von 4 bis 1.000 aufgebaut sind.

3. Formmassen nach Ansprüchen 1 und 2, dadurch gekennzeichnet, daß der mittlere Polymerisationsgrad (n + m) der organofunktionellen Siloxankomponente zwischen 10 und 600 liegt und ihr Gewichtsanteil in A) 0,5 bis 25 Gew.-% beträgt.

4. Formmassen nach Ansprüchen 1 bis 3, dadurch gekennzeichnet daß die Polydiorganosiloxancarbonamid-Einheiten enthaltenden, thermoplastischen Copolyamide unter Mitverwendung von Polyetherdiaminen mit (cyclo)-aliphatischen Aminogruppen neben normalen polyamidbildenden Diaminen hergestellt werden.

5. Formmassen nach Ansprüchen 1 bis 4, dadurch gekennzeichnet, daß 0,1 bis 20 Gew.-%, insbesondere 0,5 bis 5 Gew.-% an mindestens zwei Oxyalkylengruppen

aufweisenden Polyetherdiaminen mit zwei (cyclo)-aliphatisch gebundenen Aminogruppen und Molekulargewichten von 148 bis 3.500 neben üblichen Diaminen mitverwendet werden.

6. Formmassen nach Ansprüchen 1 bis 5, dadurch gekennzeichnet, daß das Pfropfprodukt B) als Pfropfgrundlage 65 bis 85 Gew.-% eines vernetzten, teilchenförmigen Elastomeren mit einem durchschnittlichen Teilchendurchmesser ($d_{50}$) von 0,25 bis 0,8 µm, mit einem Gelgehalt von wenigstens 70 Gew.-% und einer Glasübergangstemperatur von kleiner -20° C enthält, auf die 35 bis 15 Gew.-% eines Vinylmonomerpolymerisats aufgepfropft ist.

7. Formmassen nach Anspruch 6, dadurch gekennzeichnet, daß das Vinylmonomerpolymerisat aus einem oder mehreren $C_1$-$C_{18}$-Estern der (Meth)acrylsäure besteht und zu mehr als 40 Gew.-% auf die Pfropfgrundlage aufgepfropft vorliegt.

8. Formmassen nach Ansprüchen 6 und 7, dadurch gekennzeichnet, daß das Pfropfprodukt als Pfropfgrundlage 65 bis 85 Gew.-% eines Dienmonomerkautschuks oder Acrylatkautschuks enthält und das Vinylmonomerpropfpolymerisat durch Emulsionspfropfpolymerisation einer Mischung aus 100 bis 76 Gew.-% Methylmethacrylat und 0 bis 24 Gew.-% weiterer (Meth)-acrylsäureester erhalten wurde.

9. Formmassen nach Ansprüchen 1 bis 8, dadurch gekennzeichnet, daß sie 2 bis 60 Gew.-% eines amorphen

Polyamids, vorzugsweise auf der Basis von Hexamethylendiamin und Isophthalsäure, enthalten.

10. Formmassen nach Ansprüchen 1 bis 9, dadurch gekennzeichnet, daß sie zusätzlich bis zu 60 Gew.-% (bezogen auf A) + B) + C) = 100 %) übliche Additive wie Füll- und Verstärkungsstoffe enthalten.